Europäisches Patentamt

(19) European Patent Office

Office européen des brevets

(11) **EP 0 644 987 B1**

(12) **EUROPEAN PATENT SPECIFICATION**

(45) Date of publication and mention
of the grant of the patent:
**10.01.2001 Bulletin 2001/02**

(51) Int Cl.[7]: **F16F 6/00**, F16F 9/53,
F16F 13/00

(21) Application number: **93916607.0**

(22) Date of filing: **18.06.1993**

(86) International application number:
**PCT/US93/05835**

(87) International publication number:
**WO 94/00704 (06.01.1994 Gazette 1994/02)**

(54) **MAGNETORHEOLOGICAL FLUID DEVICES**

MAGNETORHEOLOGISCHE FLÜSSIGKEITSVORRICHTUNGEN

DISPOSITIF A FLUIDES MAGNETORHEOLOGIQUES

(84) Designated Contracting States:
**DE FR GB IT**

(30) Priority: **18.06.1992 US 900567**
**18.06.1992 US 900571**

(43) Date of publication of application:
**29.03.1995 Bulletin 1995/13**

(60) Divisional application: **00105844.5 / 1 013 963**
**00105842.9 / 1 016 805**
**00105843.7 / 1 016 806**

(73) Proprietor: **LORD CORPORATION**
**Cary, NC 27511 (US)**

(72) Inventors:
• **CARLSON, J., David**
**Cary, NC 27511 (US)**
• **CHRZAN, Michael., J.**
**Raleigh, NC 27606 (US)**
• **JAMES, Frank, O.**
**Girard, PA 16417 (US)**

(74) Representative:
**Dunlop, Brian Kenneth Charles et al**
**c/o Wynne-Jones, Lainé & James**
**22 Rodney Road**
**Cheltenham Gloucestershire GL50 1JJ (GB)**

(56) References cited:
FR-A- 1 037 787    FR-A- 1 414 841
FR-A- 2 449 826    FR-A- 2 579 283
FR-A- 2 634 530    JP-A- 57 129 944
JP-A- 58 113 644    US-A- 3 174 587
US-A- 4 159 091    US-A- 4 480 730
US-A- 4 724 937    US-A- 4 890 822
US-A- 4 981 286    US-A- 5 037 071
US-A- 5 070 972    US-A- 5 174 551
US-A- 5 176 368    US-A- 5 233 834

• PATENT ABSTRACTS OF JAPAN vol. 008, no.
076 (M-288), 9 April 1984 & JP 58 221034 A
(SHIYOUWA SEISAKUSHO:KK), 22 December
1983,
• PATENT ABSTRACTS OF JAPAN vol. 009, no.
268 (M-424), 25 October 1985 & JP 60 113711 A
(HONDA GIKEN KOGYO KK), 20 June 1985,
• PATENT ABSTRACTS OF JAPAN vol. 013, no.
020 (M-785), 18 January 1989 & JP 63 231031 A
(NKK CORP), 27 September 1988,
• KORDONSKY W I: "MAGNETORHEOLOGICAL
EFFECT AS A BASE OF NEW DEVICES AND
TECHNOLOGIES" JOURNAL OF MAGNETISM
AND MAGNETIC MATERIALS, vol. 122, no. 1 / 03,
1 April 1993, pages 395-398, XP000362585

## Description

### Field of the Invention

Incompressible fluids have been used in shock absorbers and other dampers, as well as in elastomeric mounts, for decades. The use of controllable fluids, electrorheological (ER) and magnetorheological (MR) fluids in dampers, was first proposed in the early 1950's by Winslow in U.S. Patent No. 2,661,596. The use of a controllable fluid in a damper affords some intriguing possibilities relative to providing widely varying damping for varying conditions encountered by the damper. Nonetheless, the use of controllable fluids was generally restricted to the area of clutches, with a few exceptions, until the mid-1980's.

### Background and Summary of the Invention

Interest in the use of controllable fluids revived in the 1980's as activity in the area of controllable dampers increased. Most of the resurgent activity has occurred relative to ER dampers and associated fluids. While interest and development of ER fluid devices continues, performance of such systems have been disappointing from three standpoints:

1) the damping forces that can be generated by an ER fluid device are limited due to the relatively low yield strengths of the available fluids;

2) ER fluids are susceptible to contamination which significantly degrades performance; and,

3) the strong electric fields required by ER fluids necessitate complicated and expensive high-voltage power supplies and complex control systems.

Faced with these performance restrictions and searching for a technological breakthrough to overcome them, Applicants turned to MR fluids with renewed interest and sought to optimize systems employing them. MR fluids inherently have higher yield strengths and are, therefore, capable of generating greater damping forces. Further, contamination does not pose the performance degradation threat for MR fluids that it does for ER fluids. Still further, MR fluids are activated by magnetic fields which are easily produced by simple, low-voltage electromagnetic coils.

US-A-3174587, US-A-2661596 and JP-A-60113711 each describe an MR damper which includes a housing containing a magnetorheological fluid, a piston adapted for movement therein, said piston including a ferrous metal and incorporating a number of windings N of wire defining a coil which when energised produces a magnetic flux in the piston. FR-A-2579283 describes a mount with some similar features.

It is therefore among the objects of the present invention to provide an MR damper with improved performance characteristics.

Enhancements include:

- defining dimensional/operational relationships which provide improved performance;
- devising piston designs in which the flow path for the magnetic flux is entirely contained within the piston itself;
- providing an improved twin-tube cylinder design capable of use (with some modification) with either the self-contained or spool piston;
- significantly reducing or eliminating MR fluid losses from the damper;
- providing an improved fluid valve for controlling the flow of the MR fluid to produce the desired damping forces.

These and other objects of the invention are accomplished by an apparatus for variably damping motion using an MR fluid. The apparatus includes a housing for containing a volume of MR fluid; a piston adapted for movement within the housing, the piston being formed of ferrous metal, having a number, N, of windings of conductive wire incorporated therein to define a coil that produces magnetic flux in and around the piston; and having a configuration in which

$$\frac{A_{core}}{A_{pole}}, \text{ and } \frac{A_{path}}{A_{pole}} \geq \frac{B_{opt}}{B_{knee}}$$

where $A_{core}$ is a minimum lateral cross-sectional area of the piston within ghe coil, $A_{path}$ is a minimum lateral cross-sectional area of magnetically permeable material defining a return path for the magnetic flux, $A_{pole}$ is the surface area of the piston's magnetic pole, $B_{opt}$ is an optimum magnetic flux density for the MR fluid, and $B_{knee}$ is a magnetic flux density at which the ferrous metal begins to saturate.

The housing may be provided with a sleeve of ferrous material to increase the cross-sectional area of the return flow path for the magnetic flux, $A_{path}$, for configurations in which the return path for the magnetic flux is through the housing. Alternatively, the housing may be a twin-tube design; the magnet may be formed on a spool-shaped piston or wound as a toroid thereon; the magnet could be positioned within the twin-tube housing rather than on the piston; loss of MR fluid can be prevented by topping the damper with a less dense fluid, using a scraper and seal combination, or using a sealless design. The piston may be formed from conventional ferrous materials (in either solid or laminate form) or from powdered metals. These features may be embodied in a mount as well as in a damper.

Other features, advantages and characteristics of the present invention will become apparent after a reading of the following detailed description.

**Brief Description of Drawings**

Fig. 1 is a side view in partial section of a first embodiment of the MR damper of the present invention;

Fig. 2 is an enlarged side view in partial section of the piston assembly depicted in Fig. 1;

Fig. 3 is schematic side view in partial section depicting the dimensional relationships of the first embodiment, the internal details being omitted for simplicity and clarity;

Fig. 4(a) is a graphic plot of flux density (B) vs magnetic field strength (H) for a particular MR fluid;

Fig. 4(b) is a plot of $B_{intrinsic}$ (J) vs field strength H for the same MR fluid;

Fig. 4(c) is a plot of $J^2$ vs H for the same MR fluid;

Fig. 4(d) is a plot of flux density (B) vs field strength (H) for a steel used in making the piston and housing of the present invention;

Fig. 4(e) is a plot of flux density (B) vs field strength (H) for a powdered metal used in making the piston and housing of the present invention;

Fig. 5(a) is a peak force (F) vs peak velocity (V) plot for different levels of current for a first damper configuration, with extension forces being shown as having negative values;

Fig. 5(b) is a peak force vs peak velocity plot for different levels of current for a second configuration which does not meet the preferred criteria for $^A$path/$^A$pole with extension forces being shown as having negative values;

Fig. 5(c) is a peak force vs peak velocity plot for different levels of current for a third configuration which does not meet the preferred criteria for $^A$core/$^A$pole with extension forces being shown as having negative values;

Fig. 6(a) is a peak force (F) vs current (A) plot for the first configuration operated at a stroke rate of 0.2 Hz and an amplitude of±1.0 in. (peak velocity is 1.3 in./sec) with extension forces being shown as having negative values;

Fig. 6(b) is a peak force vs current plot for the second configuration operated at a stroke rate of 0.2 Hz and an amplitude of ±1.0 in. (peak velocity is 1.3 in./sec) with extension forces being shown as having negative values;

Fig. 6(c) is a peak force vs current plot for the third configuration operated at a stroke rate of 0.23 Hz and an amplitude of ±1.0 in. (peak velocity is 1.5 in./sec) with extension forces being shown as having negative values;

Fig. 7 is a top view of a piston having a plurality of toroidally wound magnet sections, with the rod sectioned;

Fig. 8 is an isometric view partially in section of the piston of Fig. 7;

Fig. 9(a) - 9(d) are cross-sectional side views of first through fourth piston embodiments with incorporated internal valve structure;

Fig. 10(a) is a cross-sectional side view of a first twin-tube housing configuration;

Fig. 10(b) is a cross-sectional side view of a second twin-tube housing configuration;

Fig. 10(c) is a cross-sectional side view of a third twin-tube housing configuration employing two magnetic valves;

Fig. 11(a) is a schematic cross-sectional side view of a first sealless design;

Fig. 11(b) is a schematic cross-sectional side view of a second sealless design;

Fig. 11(c) is a schematic cross-sectional side view of a third sealless design;

**Description of the Preferred Embodiments**

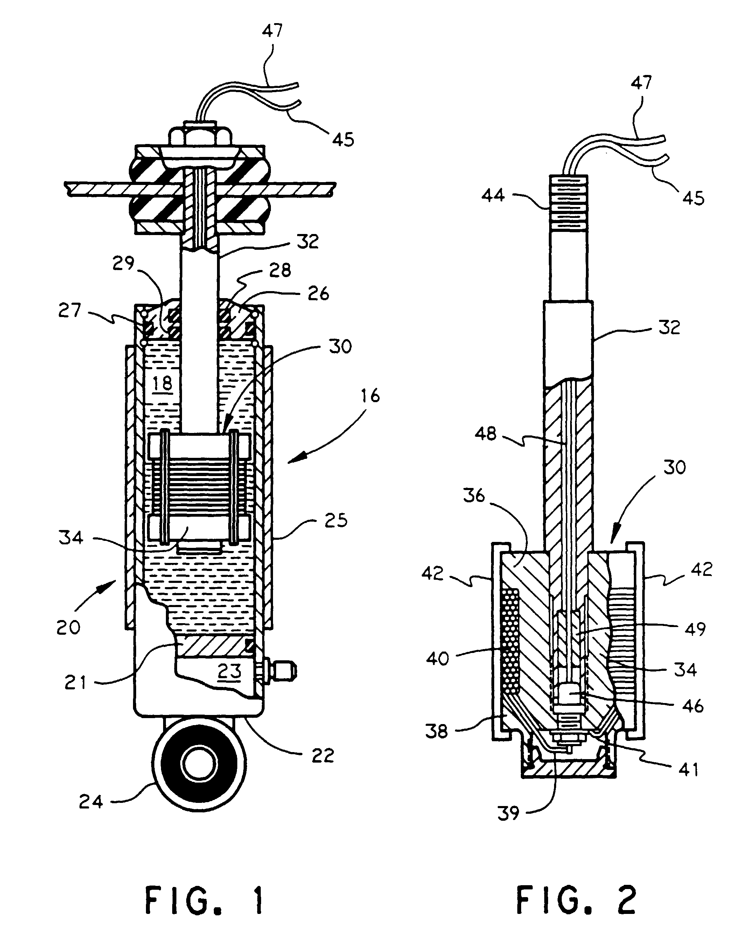

A first embodiment of the damper of the present invention is depicted in **Fig. 1** generally at **16**. Damper **16** is made up of two principal components: housing **20** and piston **30**. Housing **20** contains a volume of magnetorheological (MR) fluid **18**. One fluid which has shown itself to be particularly well-suited for this application consists of carbonyl iron particles suspended in silicone oil. This MR fluid has a relative magnetic permeability between 3 and 15 at a magnetic flux density of .002 tesla (20 gauss). An MR damper has two principal modes of operation: sliding plate and flow (or valve) modes. Components of both modes will be present in every MR damper, with the force component of the flow mode dominating.

Housing **20** is a generally cylindrical tube with a first closed end **22** with an attachment eye **24** associated therewith. A cylindrical sleeve **25** may be affixed to the inner cylinder by any conventional means (e.g., press fit, welding, adhesive) to increase the cross-sectional surface area of housing **20**, as will be discussed in greater detail hereafter. A second, or open, end of the cylinder is closed by end member **26**. A first seal **27** extends about the outer periphery of member **26** to prevent fluid leakage between housing **20** and member **26**. A second annular seal **28** is housed in a groove in the inner periphery of member **26** and seals against shaft **32**. A scraper **29** can be used to wipe the MR fluid off the surface of shaft **32** so as to minimize loss of MR fluid past seal **28**. As an additional means of preventing fluid loss, the upper regions of housing **20** can be filled with a second fluid which is immiscible with MR fluid or which can be separated from the MR fluid volume **18** by a floating baffle or rolling diaphragm (not shown).

Housing **20** is provided with a floating piston **21** to separate the MR fluid volume **18** from pressurized accumulator **23**. While a floating piston **21** is shown, other types of accumulators can be used and, in fact, a flexible rolling diaphragm of the type shown in U. S. Patent 4,811,819 is actually preferred. Accumulator **23** is necessary to accommodate fluid displaced by piston rod **32** as well as to allow for thermal expansion of the fluid.

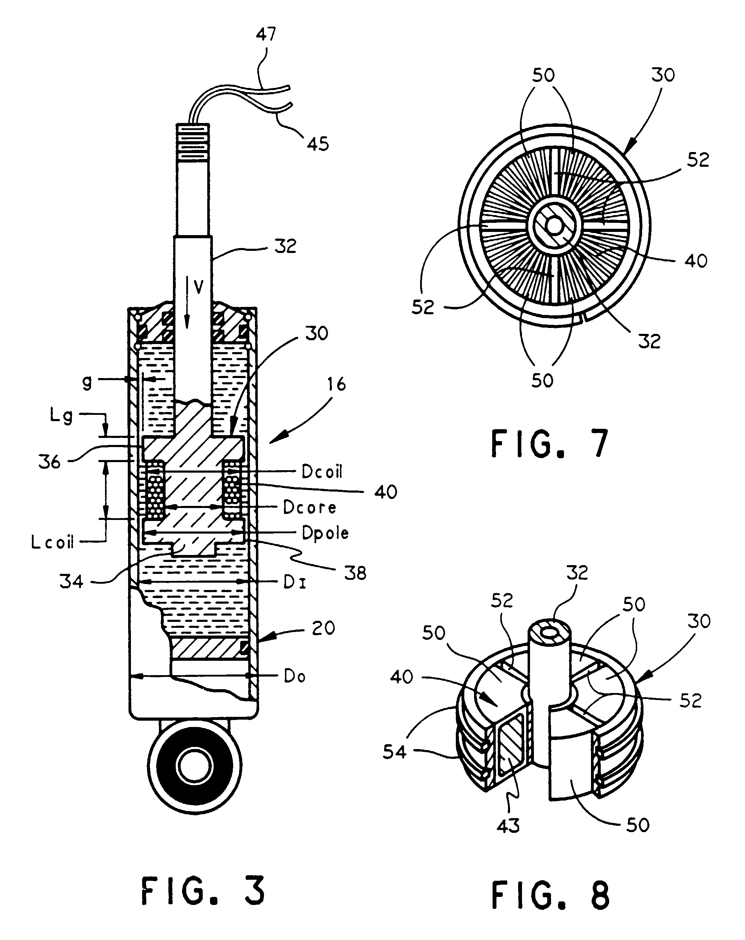

The first embodiment of piston assembly **30** is shown in greater detail in **Fig. 2**. Piston head **34** is spool shaped having an upper outwardly extending flange **36** and a lower outwardly extending flange **38**. Coil **40** is wound upon spool-shaped piston head **34** between upper flange **36** and lower flange **38**. Piston head **34** is made of a magnetically permeable material, such as low carbon steel, for example. Guide rails **42** are attached around the outside of piston head **34** at particular intervals. As shown in **Fig. 1** and **2**, four guide rails **42** are shown spaced uniformly about the periphery of piston head **34**. Piston head **34** is formed with a smaller maximum diameter (in this case, $D_{pole}$, in **Fig. 3**) than the inner diameter, $D_I$ of housing **20**. The external surfaces of guides **42** are contoured (radiused) to engage the inner diameter $D_I$ of housing **20**. Guides **42** are made of non-magnetic material (e.g., bronze, brass, nylon, or Teflon ® polymer) and maintain piston centered within gap 'g'. In this embodiment, gap g (in conjunction with coil **40**) functions as a valve to control the flow of MR fluid **18** past piston **34**.

Electrical connection is made to coil **40** through piston rod **32** by lead wires **45** and **47**. A first wire **45** is connected to a first end of an electrically conductive rod **48** which extends through piston rod **32** to Phono-jack connector **46**. The center connection of Phono-jack **46** is connected to a first end **39** of coil **40**. The second end **41** of the windings of coil **40** is attached to a "ground" connection on the outside of Phono-jack **46**. The electrical return path, then, includes piston rod **32** and the ground lead **47**. The upper end of piston rod **32** has threads **44** formed thereon to permit attachment of damper **16,** as depicted in **Fig. 1**. An external power supply, which provides a current in the range of 0-4 amps at a voltage of 12-24 volts, depending upon application, is connected to the leads **45** and **47**. An epoxy bushing **49** keeps rod **48** isolated from return path through piston rod 32. The cavity surrounding conductive rod **48** may also be filled with epoxy. The outer surface of coil **40** may be coated with epoxy paint as a protective measure.

The damper **16** of this first embodiment functions as a Coulomb or Bingham type damper, i.e., this configuration approximates an ideal damper in which the force generated is independent of piston velocity and large forces can be generated with low or zero velocity. This independence improves controllability of the damper making the force a function of the magnetic field strength, which is a function of current flow in the circuit.

**Fig. 3** schematically depicts the dimensional relationships of the damper **16**. The minimum diameter of the spool-shaped piston head **34** is the diameter of the core, $D_{core}$, and the diameter of the coil **40** is $D_{coil}$ while the length of the coil **40** is $L_{coil}$. As already noted, the gap or valve has a thickness g and the length of the pole is the width of flanges **36** and **38**, which is also the length $L_g$ of gap **g**. The inside diameter of housing **20** is $D_I$, the outside diameter is $D_o$, the maximum diameter of the piston is $D_{pole}$ (making $g = \frac{D_I - D_{pole}}{2}$).

Efforts to optimize the performance of this embodiment of MR damper has led to identifying several key relationships interrelating dimensions to its operational parameters. In basic terms, the flow of magnetic flux will be heavily dependent on several critical "bottlenecks" in the flow path:

$A_{core}$ - the minimum lateral cross-sectional area of piston head **34** within the windings of coil **40**, having a value of $\frac{\pi D_{core}^2}{4}$;

$A_{path}$ - a minimum lateral cross-sectional area of magnetically permeable material defining a return path for magnetic flux, having a value of $\frac{\pi(D_O^2 - D_I^2)}{4}$

$A_{pole}$ - a surface area of a magnetic pole of the piston, having a value of $\pi\,D_{pole}\,L_g$.

One design consideration is to minimize the amount of steel, i.e., to make $A_{core}$ and $A_{path}$ as small as possible. However, it has been found that the ratio of the bottlenecks $A_{core}$, and $A_{path}$ to $A_{pole}$ should be greater than a minimum threshold value defined by the ratio of the magnetic field strengths in the MR fluid and damper materials, giving rise to a competing design consideration. That ratio is $\frac{B_{opt}}{B_{knee}}$, where $B_{opt}$ is an optimum magnetic flux density in the MR fluid and $B_{knee}$ is the magnetic flux density at which the ferrous metal begins to become saturated.

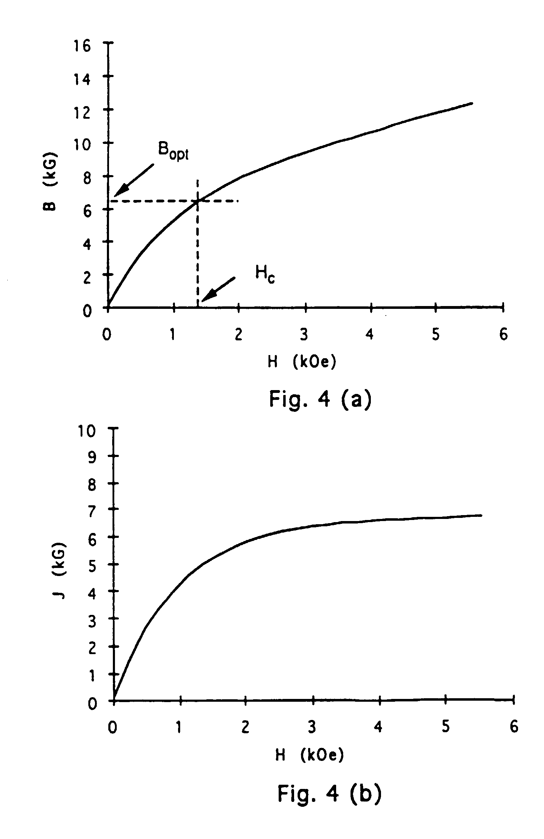

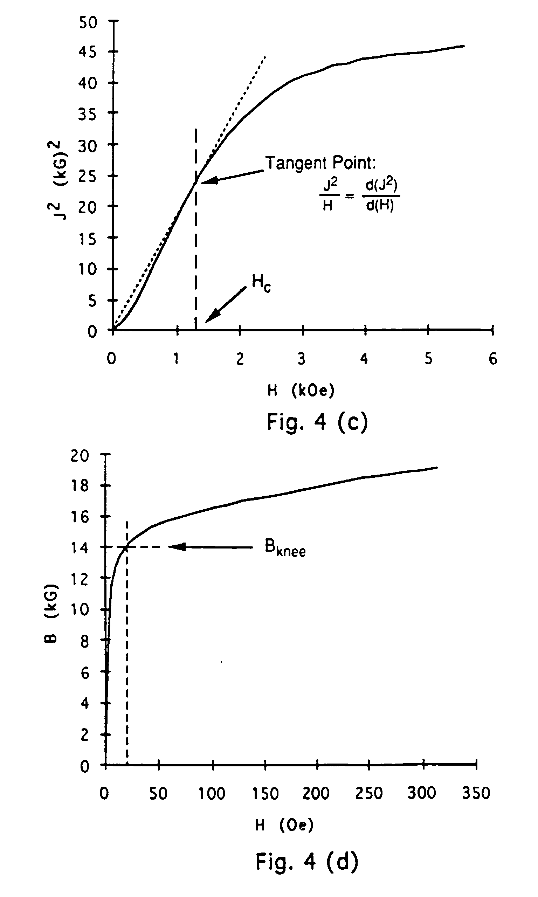

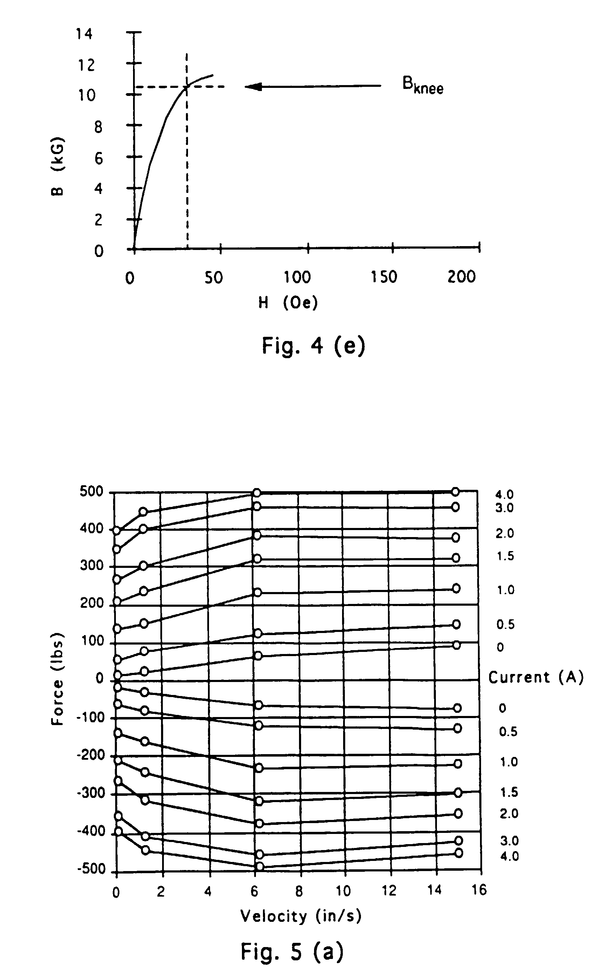

The value for $B_{opt}$ can be better understood by turning to **Figs. 4(a)-(c)**. **Fig. 4(a)** is the plot of the responsiveness of the MR fluid earlier described to magnetic field strength (magnetic flux density B vs magnetic field strength H). The magnetic flux density B has two component parts: $B_{intrinsic}$, that is, solely attributable to the fluid, and a magnetic field component having a value of $\mu_o H$, where $\mu_o$ is a magnetic permeability constant, and H is the strength of the magnetic field which can be approximated by multiplying the number of turns N in coil **40** times the current I through coil **40** divided by twice the gap **g**. $B_{intrinsic}$, or the magnetic polarization J, as it is also known, is equal to the total flux density B less the component attributable to the field strength. That is,

$$B_{intrinsic} = J = B - \mu_o H$$

**Fig. 4(b)** is a plot of J vs H for the same MR fluid represented in **Fig. 4(a)**. It is difficult to identify, with any precision, where the optimum operational point is for this MR fluid by looking only at **Fig. 4(b)**. The curve suggests that there is a non-linear increase in the value of B for H values between 100,000 and 318,000 A/m (1300 and 4000 oersteds). A more definitive method of determining a value of $B_{opt}$ is to plot the square of J vs H. This curve is shown in **Fig. 4(c)**. $B_{opt}$ is associated with the field strength H at which the slope of the $J^2$ vs H curve ($\frac{d(J^2)}{d(H)}$) equals $\frac{J^2}{H}$, that is at the point of tangency to the curve for the curve's secant tangent. For this MR fluid and, indeed, for many of the fluids which have been tested, $B_{opt}$ occurs at a value of H=100,000 A/m (1300 oersteds), and for this fluid has a value of .635 tesla (6350 gauss) as seen in **Fig. 4(a)**.

While this is a valid operational criteria, it is desirable to have as much energy in the fluid as possible and as little in the steel; that is, operationally we would like the ratio of $\frac{E_f}{E_s}$ to be as large as possible where $E_f$ is the energy in the fluid and Eg is the energy in the steel. $E_f$ and $E_s$ are given by the following expressions:

$$E_f = \frac{1}{2}\,B_f\,H_f\,V_f$$

where $V_f$ is the operational volume of fluid, and

$$E_s = \frac{1}{2}\,B_s\,H_f\,V_s$$

where $V_s$ is the operational volume of the steel.

Since,

$$V_f \approx 2\,A_{pole}\,g$$

and

$$V_s \approx A_{core} \, L_s,$$

then

$$\frac{E_f}{E_s} \approx \frac{\frac{1}{2} \, B_f \, H_f \, A_{pole} \, g}{\frac{1}{2} B_s \, H_s \, A_{core} \, L_s} \approx \frac{2 \, H_f g}{H_s \, L_s}$$

where $L_s$ is the length of the entire flux path through the steel.

The damper **16** must be operated below $B_{knee}$ for the steel as shown in **Fig. 4(d)**, for conventional steels and **Fig. 4(e)** for powdered metals. It is readily apparent that $H_s$, and hence $E_s$, go up quite rapidly for increases in H above the value corresponding to $B_{knee}$ with little or no increase in the flux density, B. From **Fig. 4(d)**, $B_{knee}$ has a value of 1.4 tesla (14000 gauss). By way of example, then, for this MR fluid and this steel, the ratio of $B_{opt}$ to $B_{knee}$ has a value of .454. More generally, this ratio should be greater than 0.4. The dimensional parametric ratios should be greater than or equal to this critical value. The value for powdered metals will be larger since $B_{knee}$ occurs at a smaller value.

The $B_{opt}$ taken from **Fig. 4(c)** represents a minimum value. $B_{opt}$ can have higher values than B = .635 tesla, so long as the flux density in the steel is not greater than Bknee and as long as the ratio $\frac{B_{opt}}{B_{knee}}$ remains equal to or less than the bottleneck ratios, $\frac{A_{core}}{A_{pole}}$, $\frac{A_{path}}{A_{pole}}$. By increasing $B_{opt}$ above .635 tesla (6350 gauss), up to a maximum of about 1.011 tesla (10,110 gauss) at H = 279,000 A/m (3500 oersted) for this configuration, more energy is input to the fluid while maintaining these desired operational parameters. This increases the ratio $\frac{E_f}{E_s}$ enhancing performance. What these relationships really tell the damper designer is that beyond a certain point, it is necessary to depart from rule 1 (minimize $A_{core}$ and $A_{path}$) in order to permit additional energy to be input into the fluid, rather than operating the damper in an inefficient operational zone (e.g., above $B_{knee}$).

In order to demonstrate the importance of these relationships, three dampers were constructed and tested. The dimensions of these dampers are shown in Table I.

TABLE I

|  | Damper #1 | Damper #2 | Damper #3 |
|---|---|---|---|
| $D_{core}$ | 34mm | 30mm | 30mm |
| $D_{pole}$ | 43mm | 42mm | 42mm |
| $D_o$ | 57.2mm | 57.2mm | 57.2mm |
| $D_l$ | 46mm | 46mm | 46mm |
| $L_g$ | 10mm | 8.8mm | 15mm |
| N | 199 turns of 23 gauge wire | 125 turns of 22 gauge wire | 125 turns of 22 gauge wire |
| $A_{core}$ | 908mm$^2$ | 707mm$^2$ | 707mm$^2$ |
| $A_{pole}$ | 1350mm$^2$ | 1161mm$^2$ | 1978mm$^2$ |
| $A_{path}$ | 908mm$^2$ | 908mm$^2$ | 908mm$^2$ |
| $\frac{A_{core}}{A_{pole}}$ | 0.673 | 0.608 | 0.357 |
| $\frac{A_{path}}{A_{pole}}$ | 0.673 | 0.260 | 0.459 |

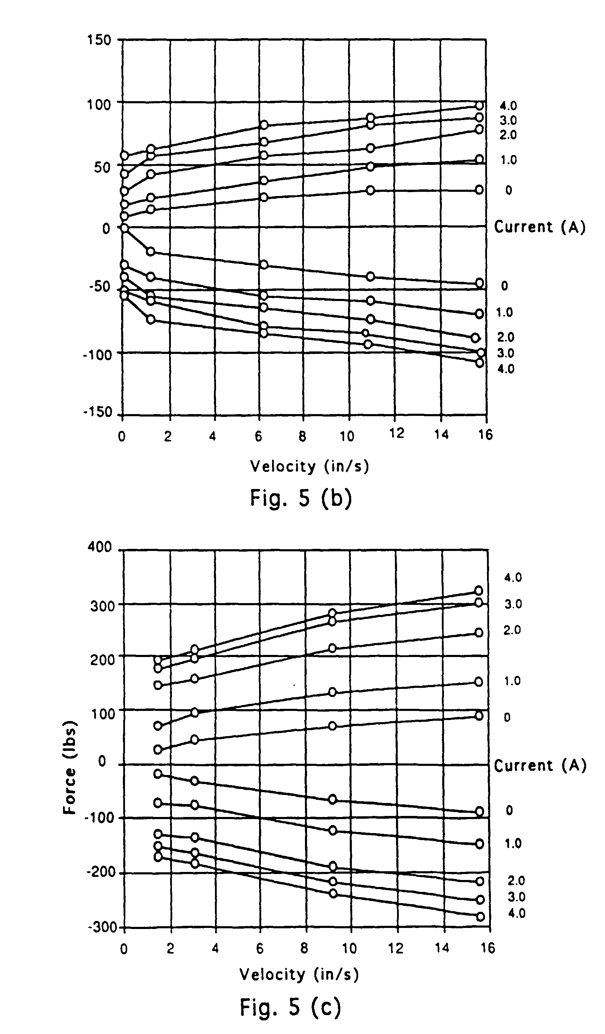

As was mentioned earlier, one desirable characteristic of an MR damper is for it to be velocity independent. **Figs. 5 (a) - (c)** establish that a damper made in accordance with these parameters achieve velocity independence. The three dampers used to construct Table I were tested under substantially similar conditions and the results are plotted in **Figs. 5 (a) - (c)**, respectively. Damper 1 meets the criteria for both ratios of $A_{core}$ and $A_{path}$ to $A_{pole}$, (i.e., both values are equal to or exceed .454), while Damper 2 is below specification for $A_{path}$ and Damper 3 is below specification for $A_{core}$. As the **Figs. 5 (a) - (c)** indicate, the performance for Damper 1 is substantially velocity independent, while those for Dampers 2 and 3 are not (as is indicated by the slope of the curves). Further, the optimized configuration of Damper 1 is capable of achieving significantly higher compression (positive) and extension (negative) forces for the same levels of current, as compared to those achievable by Dampers 2 and 3.

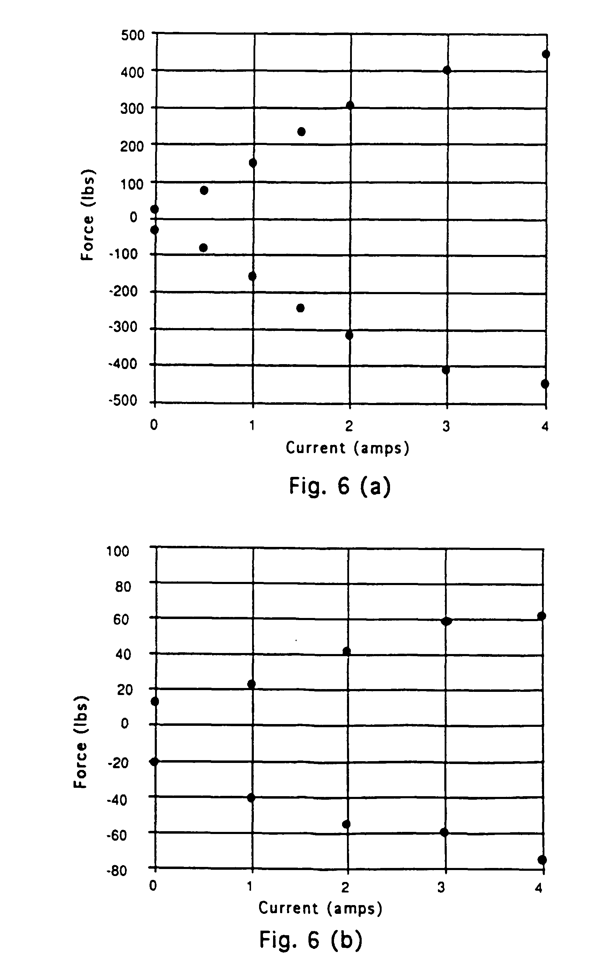

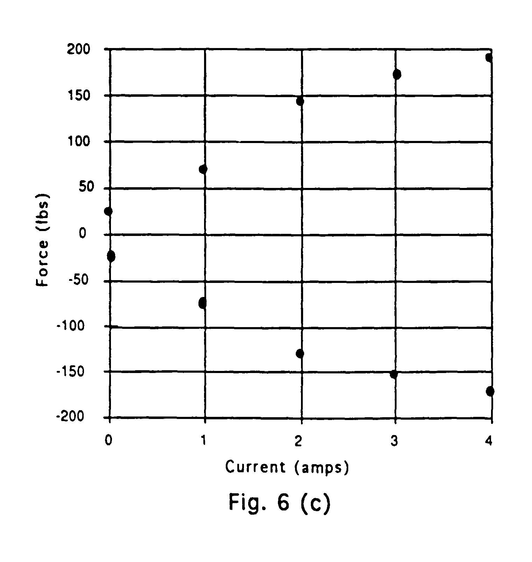

These results are confirmed by the plots shown in **Figs. 6 (a) - (c)** wherein force is plotted vs current for these same three dampers for substantially similar stroke rates and stroke lengths. Specifically, **Fig. 6 (a)** for Damper 1 and **Fig. 6 (b)** for Damper 2 were taken at a stroke rate of 0.20 Hz, an amplitude of $\pm 1.0$ inch and a peak velocity of 1.3 in/sec. Data for **Fig. 6 (c)** for Damper 3 were taken at a stroke rate of 0.23 Hz, an amplitude of $\pm 1.0$ inch and a peak velocity of 1.3 in/sec.

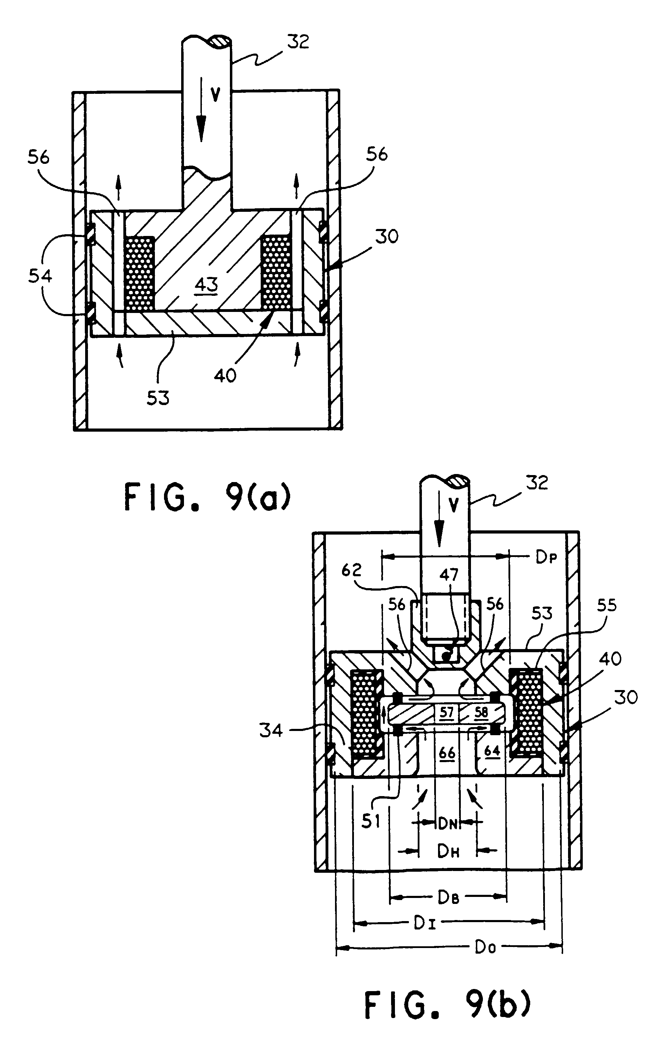

**Figs. 7** and **8** depict a second embodiment of the piston **30** useful in damper **16**. In this embodiment, coil **40** is toroidally wound about a core element **43**, whichmay be of low carbon steel or powdered metal. Actually, the toroidal coil is formed by four segments **50** with the terminal wire from one segment initiating winding of the adjacent segment **50**. In between segments **50** are four valve slots **52** to permit fluid flow through piston **30**. Twin seals **54** extend about the periphery of piston **30** and engage the inner diameter of housing **20** (**Fig. 2**) to create a fluid seal. The MR fluid **18** is, therefore, forced to flow through slots **52** and control of the flow of current through coil **40** can closely control the flow characteristics of the MR fluid.

Four additional alternative embodiments of the piston **16** are depicted in **Figs. 9(a)- (d)**. **Fig. 9(a)** depicts an embodiment in which coil **40** is wound on core element **43** and slipped into cup member **53**. Cup member **53** has a plurality of passageways **56** formed therein, has twin seals **54** extending about the periphery, and is attached to core element **43** by means such as threaded fasteners, not shown.

The ram effects of the fluid will be undesirable for certain applications and **Figs. 9(b) - (d)** disclose various baffle plate designs to cope with this problem. **Fig. 9(b)** is the first such baffle plate design. Coil **40** is wound upon a thin, cylindrical non-magnetic sleeve **55** which is then received in cup-shaped member **53**. The internal portions of cup-shaped member **53** including contained passageways **56** can easily be machined prior to insertion of coil **40**.

Baffle plate **58** is retained in position by non-magnetic supports **51** which may be adhered to the surface of plate **58**. Cup-shaped member **53** is formed with an extension **62** which is threaded onto piston rod **32**. End cap **64** fits within the lower end of coil **40** and may be retained there by conventional means (fasteners, welding or peripheral threads engaging internal threads in cup-shaped member **53**). A central hole **66** in end cap **64** permits flow through the piston, baffle plate **58** serving to diminish ram effects and extending the length of the fluid path in which the MR fluid is under the influence of the magnetic field. A hole **57** may optionally be provided in plate **58**, depending upon the desired flow characteristics.

In this (**Fig. 9(b)**) embodiment, the return path for the magnetic flux is through the radially outer reaches of piston head **34**, with $D_I$ being the inner dimension of the flow path and $D_O$ being the outer dimension thereof. $D_B$ is the diameter of the baffle plate **58**, $D_P$ is the diameter of the pole (the inside diameter of the coil) and $D_H$ is the diameter of the hole **66**. The diameter of baffle plate hole **57** is $D_N$. The magnetic flux will pass through the most apparently "solid" magnetically conductive path, (i.e., with only minimal gaps and no obstructions).

The critical bottleneck dimensions are, then, expressed as follows:

$$A_{core} = \frac{\pi (D_B{}^2 - D_N{}^2)}{4}$$

$$A_{path} = \frac{\pi (D_O{}^2 - D_I{}^2)}{4}$$

$$A_{pole} = \frac{\pi (D_P{}^2 - D_H{}^2)}{4}$$

Each different geometry has its own associated equations which define its operational characteristics.

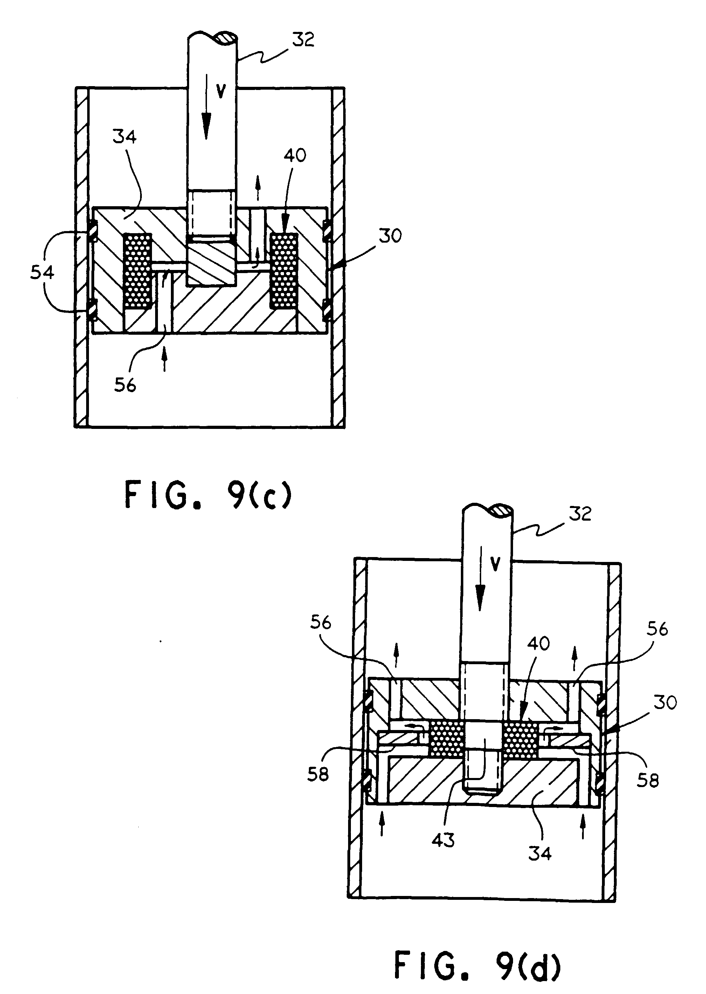

**Fig. 9(c)** depicts an embodiment in which piston head **34** contains a single passageway **56** with a lateral, partially circular portion. **Fig. 9(c)** depicts this lateral portion as extending through 180°, although the passageway could obviously extend through a larger or a smaller circular arc.

**Fig. 9(d)** depicts an alternate baffle plate embodiment in which the coil **40** is wound upon the end of piston rod **32**. Care must be taken with this embodiment to make the core portion **43** of piston rod **32** of sufficient diameter to avoid saturation of the core.

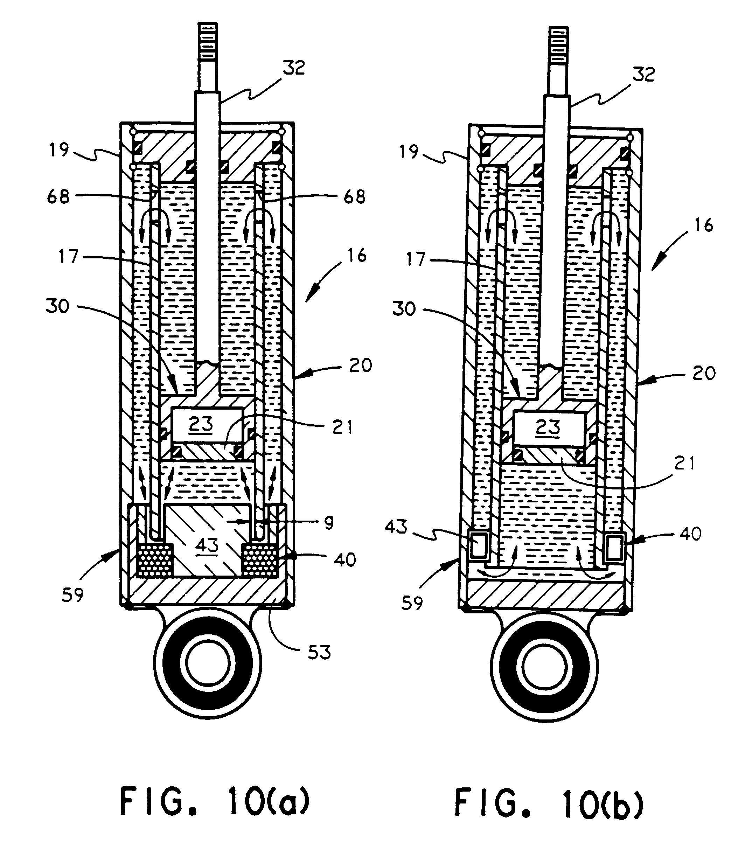

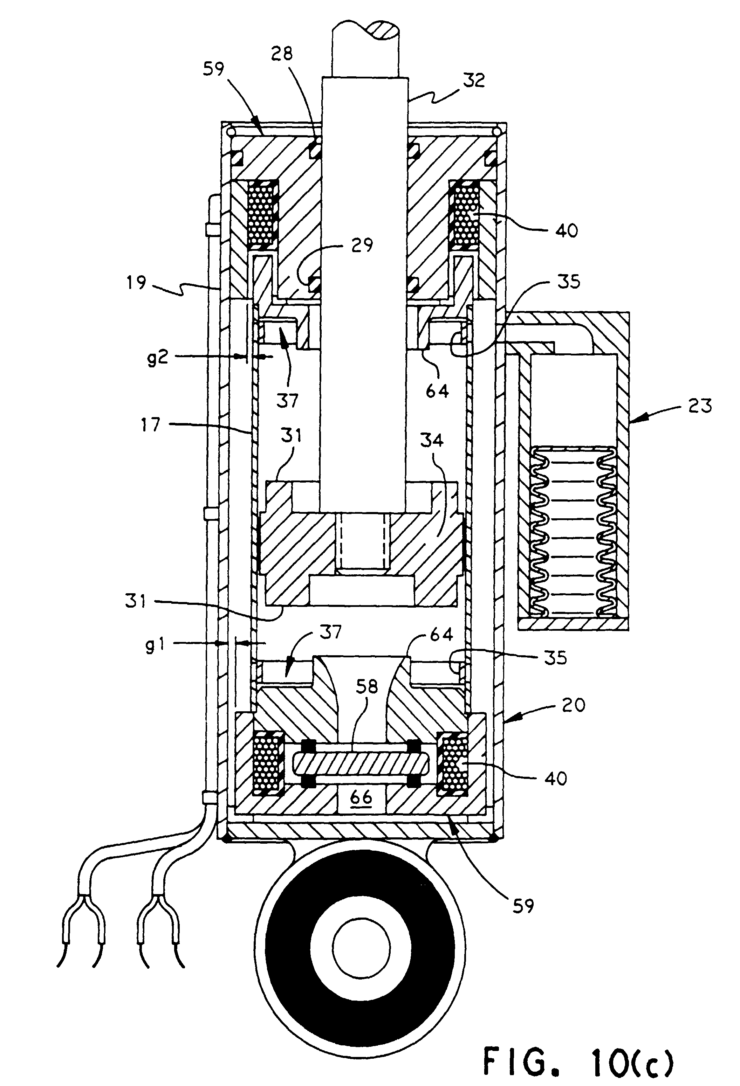

Each of the embodiments discussed thus far, incorporate the magnetic coil **40** into piston head **34**. In some applications it may be preferable for the coil to be associated with housing **20**, if housing **20** is more stationary, to minimize flexing of wires. The three embodiments shown in **Figs. 10(a) -(c)** each employ a twin-tube housing **20** which allow the coil **40** to be located stationarily relative to the housing. Housing **20** has a first inner tube **17** and a second outer tube **19**. Valve member **59** comprises coil **40** which is wrapped around core element **43** and the end of inner tube **17** is stabilized between core element **43** and cup-shaped end member **53** by spacers (not shown) to define the gap **g** of valve member **59**. Accumulator **23** is incorporated into piston head **34**. As shown, a floating piston **21** can be used to create the accumulator **23** or, as mentioned with respect to earlier embodiments, a rolling diaphragm of a type similar to that taught in U. S. Patent No. 4,811,919, which is hereby incorporated by reference, may be used. Any type of accumulator may be used.

As the piston **30** experiences a compressive stroke, the MR fluid is a) forced through gap **g**, which (in conjunction with coil **40**) functions as a valve, b) into outer tube **19**, c) through openings **68** back into the inner tube **17**. The flow characteristics of MR fluid **18** will be controlled by regulating the current flow in coil **40**, as with previous embodiments.

**Fig. 10(b)** shows a similar twin tube housing **20** in which coil **40** is toroidally wound about core **43** in segments with intermittent slots as in the **Fig. 8** embodiment. The slots, in conjunction with the coil **40** will function as the valve for the MR fluid **18** in this embodiment.

**Fig. 10(c)** demonstrates a third embodiment of a damper **16** which has a twin tube housing **20**. In this embodiment, two coils **40** are used, the lower coil **40** and gap **g$_1$** form the valve for controlling flow of the compressive stroke while upper coil **40** and gap **g$_2$** form the valve for controlling flow on the extension stroke. Lower valve member **59** is depicted as having a baffle plate **58**, while upper valve member **59**, which must permit passage of piston rod **32**, is of a modified solenoidal design. Upper and lower check valves **35**, which are preferably reed valves that flap open and closed responsive to fluid pressure, provide fluid bypass of upper and lower coils **40** for the compression and extension strokes, respectively.

An externally mounted accumulator **23** of the type shown in U. S. patent no. 4,858,898 is used in this embodiment which comprises an elastomeric bladder that may be filled with air or foam rubber. As with the other accumulators, accumulator **23** provides room for additional incompressible MR fluid resulting from displacement by piston rod **32** or from thermal fluid expansion. In this embodiment, no electrical connections are made through piston rod **32** and piston head **34** has a more conventional engagement with inner tube **17** (i.e., no fluid flow past or through). Recesses **37** form pockets which in conjunction with hydraulic end stops **31** trap fluid and prevent piston head **34** from banging into either end cap **64**. This double-valve design is particularly useful for dampers generating large forces. In such applications, the use of two valves **59** provides more precise control and reduces the risk of cavitation of the fluid. Further, the forces generated in the compression and extension strokes can be individually tailored to fit the desired design parameters.

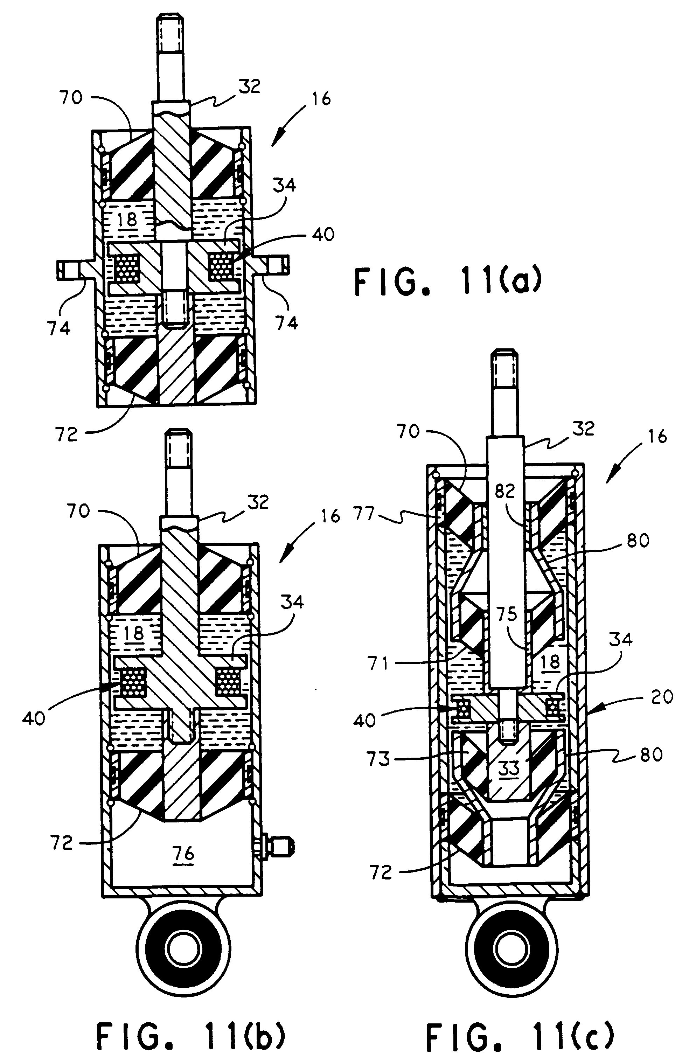

**Figs. 11(a)** - **11(c)** depict three embodiments of sealless dampers **16**. One problem with the conventional damper design is preventing loss of the MR fluid which would result in diminished performance. Previously described embodiments have proposed the use of a secondary fluid with a combination scraper and seal to cope with this problem. A secondary problem is the need for an accumulator with the conventional designs to provide for fluid displaced by piston rod. With the sealless designs of **Figs. 11(a) - (c)**, the piston rod **32** extends above and below piston head **34** and has elastomer elements **70** and **72** which may be of frustoconical design, bonded to its upper and lower extents, respectively. Elastomer elements **70, 72** are also bonded to housing **20** trapping a fixed volume of fluid **18**. An accumulator is unnecessary since there is no fluid displaced by piston rod **32** which cannot be accommodated by the volume on the opposite side of piston head **34**. Depending on the bulge stiffness of the elastomer, the elements **70** and **72** can accommodate thermal expansion of the fluid. Electrical connection is made to coil **40** through shaft **32**, as in earlier embodiments. Ears **74** (**Fig. 11(a)**) provide means for attaching housing **20** to one of the two elements to be isolated with piston rod **32** being attachable to the other.

The embodiment of **Fig. 11(b)** affords a means of providing greater resistance to compressive forces than to extension forces by pressurizing (or charging) chamber **76**.

**Fig. 11(c)** shows a third sealless embodiment designed to provide extended stroke. As shown in **Fig. 11(c)** damper **16** is shown at the completion of a compression stroke. Disc shaped elastomer **70** is bonded at its outer extremity to a ring **77** which sits atop the inner cylinder of housing **20** and its inner periphery is bonded to element **80**, which is preferably metallic. The upper inner periphery of element **80** slides freely relative to piston rod **32** by virtue of bearing **82**. The lower inner periphery of element **80** is bonded to the outside of disc-shaped elastomer **71** whose inner periphery is bonded to cylindrical sleeve **75**. Sleeve **75** moves with piston rod **32** but its use ( being separable therefrom) facilitates manufacture.

A second element **80** has the outer periphery of disc-shaped elastomer **72** bonded to its inner upper periphery. The inner periphery of disc **72** is bonded to piston rod extension **33**. A fourth disc-shaped elastomer element **73** is bonded to the outer lower periphery of second element **80** and to ring **78** which is trapped between portions of housing **20** and, functionally, becomes a part thereof. This embodiment permits the throw length of damper **16** to be extended and, obviously, additional throw length could be added as necessary by stacking additional elements **80** with associated disc-shaped elastomers **70-73**.

The present invention provides a number of embodiments of an MR fluid damper with a variety of novel characteristics. A first embodiment optimizes the dimensional and operational parameters of the damper to provide a high level of controllability. A second embodiment provides an alternate piston head with a toroidally wound magnet incorporated therein. Third through sixth embodiments provide piston heads with fluid flow therethrough (rather than therearound) and the magnetic flux path contained entirely within the piston head. A series of seventh through ninth embodiments provide alternate housing configurations in which the flow control magnet is associated with the housing, including one embodiment in which an upper and a lower flow control valve is used. Tenth through twelfth damper embodiments teach sealless dampers which eliminate loss of MR fluids and, finally, two MR fluid mount designs employing the features of the present invention are described.

Various changes, alternatives and modifications will become apparent to those of ordinary skill in the art following a reading of the foregoing description. For, example, while the piston motion being damped has implicitly been axial, it will be appreciated by those of ordinary skill in the art that dampers made in accordance with the specifics of this invention will be equally well adapted for damping rotary motion, or combinations of linear and rotary motion, as well. Further, although electromagnets have been described exclusively, it will be appreciated that permanent magnets may be utilized to provide some or all of the magnetic field. It is intended that all such changes, alternatives and modifications as come within the scope of the appended claims be considered part of the the present invention.

**Claims**

1. Apparatus (16) for variably damping motion which employs a magnetorheological fluid (18) including

    housing (20) for containing a volume of magneto-rheological fluid;

    a piston (30) adapted for movement within said fluid-containing housing, said piston

      being comprised of a ferrous metal,

      incorporating therein a number N of windings of an electrically conductive wire defining a coil (40) which produces magnetic flux in and around said piston, and

      and the piston being characterized by exhibiting a configuration where

$$\frac{A_{core}}{A_{pole}}, \text{ and } \frac{A_{path}}{A_{pole}} \geq \frac{B_{opt}}{B_{knee}}$$

    where

    $A_{core}$ = a minimum lateral cross-sectional area of said piston within said coil,

    $A_{path}$ = a minimum lateral cross-sectional area of magnetically permeable material defining a return path for said magnetic flux,

    $A_{pole}$ = a surface area of a magnetic pole of said piston,

    $B_{opt}$ = an optimum magnetic flux density for said magnetorheological fluid,

    $B_{knee}$ = a magnetic flux density at which said ferrous metal begins to become saturated;

    and where valve means are associated with one of said housing and said piston for controlling movement of said magnetorheological fluid.

2. The apparatus (16) of Claim 1 wherein said housing (20) has an inner diameter $D_I$ and an outer diameter $D_O$ and

$$A_{path} = \frac{(D_O{}^2 - D_I{}^2)}{4}$$

3. The apparatus (16) of Claim 2 wherein said piston (30) includes a baffle plate (58) having a diameter $D_B$, a hole (57) through said baffle plate having a diameter $D_N$, an entrance hole (66) in the piston having a diameter $D_H$, and a diameter $D_P$ such that

$$A_{core} = \frac{(D_B{}^2 - D_N{}^2)}{4}$$

and,

$$A_{pole} = \frac{(D_P{}^2 - D_H{}^2)}{4}$$

4. The apparatus (16) of Claim 1 wherein said housing (20) is comprised of a magnetically permeable material and said return path for said magnetic flux is at least partially through said housing.

5. The apparatus (16) of Claim 4 wherein said housing (20) has an inner diameter $D_I$ and an outer diameter $D_O$ and

$$A_{path} = \frac{(D_O{}^2 - D_I{}^2)}{4}$$

6. The apparatus (16) of Claim 5 wherein said central portion has a diameter $D_{core}$, each flange portion (36, 38) has a thickness $L_g$ and a diameter $D_{pole}$ such that

$$A_{core} = \frac{D^2{}_{core}}{4}$$

and,

$$A_{pole} = D_{pole} \, L_g.$$

7. The apparatus (16) of Claim 6 wherein $B_{opt} = J_{opt} + \mu_o H$ where

$J_{opt}$ is defined as the point at which the slope of the $J^2$ vs H curve is $\frac{J^2}{H}$

$\mu_o$ is a magnetic permeability constant, and

H is a magnetizing force applied to the magnetorheological fluid (18).

8. The apparatus (16) of Claim 1 wherein said valve means is formed in said piston (30), a current level in said coil (40) being used to control the amount of magnetorheological fluid (18) flowing through said valve means.

9. The apparatus (16) of Claim 8 wherein said valve means comprise a plurality of slots (52) extending substantially radially and longitudinally through said piston (30).

10. The apparatus (16) of Claim 8 wherein said valve means comprises a gap (g) which extends at least partially circumferentially about said piston (30) relative to said housing (20).

11. The apparatus (16) of Claim 1 further comprising a cylindrical magnetic element (36, 38) associated with each of two sets of apertures (g).

12. The apparatus (16) of Claim 1 further comprising a first scraper (29) mounted in an upper portion of said housing (20) for engaging a portion of a piston rod (32) attached to said piston (30), and a seal (28) also engaging said piston rod, said scraper and seal cooperating to retain said magnetorheological fluid (18) within said housing (20).

**Patentansprüche**

1. Vorrichtung (16) zur variablen Dämpfung einer Bewegung, welche ein magnetorheologisches Fluid (18) einsetzt, mit

   einem Gehäuse (20) zur Aufnahme eines Volumens an elektrorheologischem Fluid,

   einem Kolben (30), der sich innerhalb des fluidenthaltenden Gehäuses zu bewegen vermag, wobei der Kolben

   aus einem Eisenmetall besteht,

   eine Anzahl von N-Windungen aus einem elektrisch leitenden Draht einschließt, die eine Spule (40) definieren, welche einen Magnetfluß innerhalb und um den Kolben erzeugt, und

   der Kolben gekennzeichnet ist durch die Darstellung einer Konfiguration, die die folgenden Bedingungen erfüllt

   $$\frac{A_{core}}{A_{pole}} \text{ und } \frac{A_{path}}{A_{pole}}, \geq \frac{B_{opt}}{B_{knee}}$$

   wobei

   $A_{core}$ = ein minimaler lateraler Querschnittsbereich des Kolbens innerhalb der Spule;

   $A_{path}$ = ein minimaler lateraler Querschnittsbereich eines magnetisch permeablen Materials, welches den Rückkehrweg für den magnetischen Fluß definiert,

   $A_{pole}$ = ein Oberflächenbereich des magnetischen Pols des Kolbens,

   $B_{opt}$ = eine optimale magnetische Flußdichte für das magnetorheologische Fluid,

   $B_{knee}$ = eine magnetische Flußdichte, bei welcher das Eisenmaterial anfängt gesättigt zu werden,

   und wobei Ventileinrichtungen dem Gehäuse oder dem Kolben zugeordnet sind zur Steuerung der Bewegung des magnetorheologischen Fluids.

2. Vorrichtung (16) gemäß Anspruch 1, wobei das Gehäuse (20) einen Innendurchmesser ($D_I$) und einen Außendurchmesser ($D_O$) besitzt und die folgende Beziehung gilt

   $$A_{path} = \frac{(D_O{}^2 - D_I{}^2)}{4}$$

3. Vorrichtung (16) gemäß Anspruch 2, wobei der Kolben (30) eine Prallplatte (58) umfaßt mit einem Durchmesser $D_B$, eine Öffnung (57) durch die Prallplatte mit einem Durchmesser $D_N$, eine Eintrittsöffnung (66) in den Kolben mit einem Durchmesser $D_H$ sowie einem Durchmesser $D_P$ derart, daß die folgenden Beziehungen gelten

   $$A_{core} = \frac{(D_B{}^2 - D_N{}^2)}{4}$$

   und

$$A_{pole} = \frac{(D_P{}^2 - D_H{}^2)}{4}$$

4. Vorrichtung (16) gemäß Anspruch 1, wobei das Gehäuse (20) aus magnetisch permeablem Material besteht und der Rückkehrweg für den magnetischen Fluß zumindest teilweise durch das Gehäuse verläuft.

5. Vorrichtung (16) gemäß Anspruch 4, wobei das Gehäuse (20) einen Innendurchmesser $D_I$ und einen Außendurchmesser $D_O$ besitzt und die folgende Beziehung gilt

$$A_{path} = \frac{(D_O{}^2 - D_I{}^2)}{4}$$

6. Vorrichtung (16) gemäß Anspruch 5, wobei der mittlere Bereich einen Durchmesser $D_{core}$ und jeder Flanschteil (36, 38) eine Dicke $L_g$ und einen Durchmesser $D_{pol}$ besitzt und die folgende Ziehung gilt

$$A_{core} = \frac{D_{core}^2}{4}$$

und

$$A_{pole} = D_{pole}\, L_g.$$

7. Vorrichtung (16) gemäß Anspruch 6 mit $B_{opt} = J_{opt} + \mu_0 H$, wobei $J_{opt}$ definiert ist als der Punkt, bei welchem die Steigung der $J^2$ über H-Kurve $\frac{J^2}{H}$ ist,

$\mu_0$ die magnetische Permeabilitätskonstante und

H eine Magnetisierungskraft angelegt an das magnetorheologische Fluid (18) ist.

8. Vorrichtung (16) gemäß Anspruch 1, wobei die Ventileinrichtung innerhalb des Kolbens (30) ausgebildet ist und ein Stromniveau in der Spule 40 eingesetzt wird zur Steuerung der Menge an magnetorheologischem Fluid (18), welches die Ventileinrichtung durchströmt.

9. Vorrichtung (16) gemäß Anspruch 8, wobei die Ventileinrichtung eine Mehrzahl von Schlitzen (52) umfaßt, die sich im wesentlichen radial und longitudinal durch den Kolben (30) erstrecken.

10. Vorrichtung (16) gemäß Anspruch 8, wobei die Ventileinrichtung einen Freiraum (g) umfaßt, welcher sich zumindest teilweise um den Umfang des kolbens (30) erstreckt, relativ zum Gehäuse (20).

11. Vorrichtung (16) gemäß Anspruch 1, mit darüber hinaus einem zylindrischen magnetischen Element (36, 38), jeder der beiden Gruppen der Öffnungen (g) zugeordnet.

12. Vorrichtung (16) gemäß Anspruch 1, mit darüber hinaus einem ersten Abstreifer (29), der in dem oberen Teil des Gehäuses (20) montiert ist, zum Eingriff mit einem Teil der Kolbenstange (32), die an dem Kolben (30) befestigt ist, wobei eine Dichtung (28) ebenfalls an der Kolbenstange eingreift und der Abstreifer und die Dichtung zusammenwirken zum Halten des magnetorheologischen Fluids (18) innerhalb des Gehäuses (20).

**Revendications**

1. Dispositif (16) pour amortir de manière variable un mouvement, utilisant un fluide magnétorhéologique (18) et comprenant :

un carter (20) destiné à contenir un volume de fluide magnétorhéologique ;

un piston (30) adapté pour se déplacer à l'intérieur dudit carter contenant le fluide, ledit piston

étant constitué d'un métal ferreux,
renfermant un nombre N d'enroulements d'un fil électriquement conducteur définissant une bobine (40) qui produit un flux magnétique dans ledit piston et autour de celui-ci, et caractérisé en ce qu'il présente une configuration dans laquelle

$$\frac{A_{core}}{A_{pole}}, \text{ et } \frac{A_{path}}{A_{pole}} \geq B_{opt}\overline{B_{knee}}$$

où

$A_{core}$ =     aire de la section transversale latérale minimale dudit piston à l'intérieur de ladite bobine,
$A_{path}$ =     aire de la section transversale latérale minimale d'un matériau magnétiquement perméable définissant un chemin de retour pour ledit flux magnétique,
$A_{pole}$ =     aire de surface d'un pôle magnétique dudit piston,
$B_{opt}$ =     densité de flux magnétique optimale pour ledit fluide magnétorhéologique,
$B_{knee}$ =     densité de flux magnétique à laquelle ledit métal ferreux commence à être saturé ;

et dans lequel des moyens formant soupape sont associés à l'un dudit carter et dudit piston afin de réguler un déplacement dudit fluide magnétorhéologique.

2.   Dispositif (16) selon la revendication 1, dans lequel ledit carter (20) a un diamètre intérieur $D_I$ et un diamètre extérieur $D_O$, et

$$A_{path} = \frac{\left(D_O{}^2 - D_I{}^2\right)}{4}$$

3.   Dispositif (16) selon la revendication 2, dans lequel ledit piston (30) comprend une plaque formant déflecteur (58) ayant un diamètre $D_B$, un trou (57) traversant ladite plaque formant déflecteur et ayant un diamètre $D_N$, un trou d'entrée (66) ménagé dans le piston et ayant un diamètre $D_H$, et un diamètre $D_P$, de sorte que

$$A_{core} = \frac{\left(D_B{}^2 - D_N{}^2\right)}{4}$$

et

$$A_{pole} = \frac{\left(D_P{}^2 - D_H{}^2\right)}{4}$$

4.   Dispositif (16) selon la revendication 1, dans lequel ledit carter (20) est constitué d'un matériau magnétiquement perméable et ledit chemin de retour pour ledit flux magnétique passe au moins partiellement à travers ledit carter.

5.   Dispositif (16) selon la revendication 4, dans lequel ledit carter (20) a un diamètre intérieur $D_I$ et un diamètre extérieur $D_O$, et

$$A_{path} = \frac{\left(D_O{}^2 - D_I{}^2\right)}{4}$$

6.  Dispositif (16) selon la revendication 5, dans lequel ladite partie centrale a un diamètre $D_{core}$, chaque partie formant collerette (36, 38) a une épaisseur $L_g$ et un diamètre $D_{pole}$, de sorte que

$$A_{core} = \frac{D_{core}^2}{4}$$

et

$$A_{pole} = D_{pole}\, L_g$$

7.  Dispositif (16) selon la revendication 6, dans lequel $B_{opt} = J_{opt} + \mu_o H$, où

    $J_{opt}$ est défini comme étant le point au niveau duquel la pente de la courbe $J^2$ en fonction de H est $\frac{J^2}{H}$
    $\mu_o$ est une constante de perméabilité magnétique, et
    H est une force magnétisante appliquée au fluide magnétorhéologique (18).

8.  Dispositif (16) selon la revendication 1, dans lequel lesdits moyens formant soupape sont définis dans ledit piston (30), un niveau de courant dans ladite bobine (40) étant utilisé pour réguler la quantité de fluide magnétorhéologique (18) circulant à travers lesdits moyens formant soupape.

9.  Dispositif (16) selon la revendication 8, dans lequel lesdits moyens formant soupape comprennent plusieurs fentes (52) s'étendant sensiblement radialement et longituàinalement à travers ledit piston (30).

10. Dispositif (16) selon la revendication 8, dans lequel lesdits moyens formant soupape comprennent un interstice (g) qui s'étend au moins en partie circonférentiellement autour dudit piston (30) par rapport audit carter (20).

11. Dispositif (16) selon la revendication 1, comprenant en outre un élément magnétique cylindrique (36, 38) associé à chacun de deux jeux d'ouvertures (g).

12. Dispositif (16) selon la revendication 1, comprenant en outre un premier racleur (29) monté dans une partie supérieure dudit carter (20) afin de venir en contact avec une partie d'une tige de piston (32) fixée audit piston (30), et un joint d'étanchéité (28) venant également en contact avec ladite tige de piston, ledit racleur et ledit joint d'étanchéité coopérant pour retenir ledit fluide magnétorhéologique (18) à l'intérieur dudit carter (20).

FIG. 1

FIG. 2

FIG. 7

FIG. 3

FIG. 8

Fig. 4 (a)

Fig. 4 (b)

Fig. 4 (c)

Fig. 4 (d)

Fig. 4 (e)

Fig. 5 (a)

Fig. 5 (b)

Fig. 5 (c)

Fig. 6 (a)

Fig. 6 (b)

Fig. 6 (c)

FIG. 9(a)

FIG. 9(b)

FIG. 9(c)

FIG. 9(d)

FIG. 10(a)

FIG. 10(b)

FIG. 10(c)

FIG. 11(a)

FIG. 11(b)

FIG. 11(c)